# EUROPEAN PATENT APPLICATION

(11) **EP 4 030 360 A1**
(43) Date of publication of application: **20.07.2022**
(21) Application number: 21152097.8
(22) Date of filing: 18.01.2021
(51) Int. Cl.: G06Q 10/00, G06Q 10/06, G06Q 50/30

(54) **INFORMATION MANAGEMENT SYSTEM FOR TARGET GROUP-OPTIMIZED OUTPUT OF INFORMATION TO PERSONS IN A PASSENGER BOARDING BRIDGE**

(71) Applicant: thyssenkrupp Airport Solutions, S.A., 33682 Mieres (Asturias) (ES)
(72) Inventor: Petry, Frederik, 22765 Hamburg (DE)
(74) Representative: Michalski Hüttermann & Partner Patentanwälte mbB

(57) **Abstract**

The present invention relates to an information management system for target group-optimized output of information (1, 2, 3) to persons (11, 12, 13, 21, 22, 23, 31, 32) in a passenger boarding bridge (200), the information management system (100) comprising:
- a detection system (300) configured to detect persons (11, 12, 13, 21, 22, 23, 31, 32) entering the boarding bridge (200), taking into account their entry order;
- a computing system (400) configured to assign the persons (11, 12, 13, 21, 22, 23, 31, 32) detected by a detection system (300) to target groups (10, 20, 30),
- wherein the entering persons (11, 12, 13, 21, 22, 23, 31, 32) are assigned to the respective target group (10, 20, 30) based on the entry order;
- an information output system (500) being configured to output target group-optimized information (1, 2, 3) in the passenger boarding bridge (200).

## Description

### Technical field

The present invention relates to an information management system for target group-optimized output of information to persons in a passenger boarding bridge.

The present invention also refers to a passenger boarding bridge comprising the above mentioned information management system.

Furthermore, the present invention refers to a method using the above mentioned information management system.

Furthermore, the present invention refers to a computer program comprising instructions which, when the program is executed by a computer, cause the computer to execute the steps of the method.

Furthermore, the present invention refers to a data carrier signal, which the computer program transmits.

Furthermore, the present invention refers to a computer-readable medium comprising instructions which, when executed by a computer, cause the computer to execute the steps of the method.

### Background of the invention

Some persons travel for business, others for vacation purposes, others to visits friends and relatives. Some persons are well off and travel in first or business class whereas the vast majority travels in economy class. Persons with all kind of different cultural background can be found at an airport. This means, traveling persons often have different interests in airports. For example, a CEO flying to Amsterdam for a trade show will have a different set of interests than a group of young men flying to Amsterdam for a bachelor party. While the CEO would probably be happy to receive trade show information, this would be completely uninteresting to the young men. Instead, information about the weather and/or upcoming party events would be considerably more interesting. This can be understood as personalized information.

One challenge, however, is the ever-increasing data protection requirements. Due to national regulations, it is not permitted at many airports to pass on and/or use personal data of a data subject without his or her express consent. So there are significant hurdles in terms of personalized information disclosure. For example, the name of the CEO cannot simply be passed on by the airline to an information provider, who would then provide the CEO with information that is more likely to be relevant to him. This data protection complication, among others, comprises a unity of information output that is presented to all in the same way, i.e., regardless of the probable interest.

### Description of the invention

Starting from this situation, it is an object of the present invention to provide a system and related elements that enable a data protection compliant and yet at least partially personalized information output to traveling persons.

The object of the invention is solved by the features of the independent main claims. Advantageous features are indicated in the subclaims. If technically possible, the teachings of the subclaims can be combined arbitrarily with the teachings of the main and subclaims.

In particular, the object is therefore solved by an information management system for target group-optimized output of information to persons in a passenger boarding bridge, the system comprising:
- a detection system configured to detect persons entering the boarding bridge, taking into account their entry order;
- a computing system configured to assign the persons detected by a detection system to target groups,
   - wherein at least a first target group comprises a defined maximum number of persons, wherein the computing system determines the respective target group as complete when it comprises its defined maximum number of persons, wherein subsequently entering persons are assigned to a next target group,
   - wherein the entering persons are assigned to the respective target group based on the entry order;
- an information output system with one or more output means, the information output system being configured to output target group-optimized information in the passenger boarding bridge.

In the following, the advantageous aspects of the claimed invention are explained and further below, preferred modified embodiments of the invention are described. Explanations, in particular on advantages and definitions of features, are basically descriptive and preferred, but not limiting examples. If an explanation is limiting, this is expressly mentioned.

A preferred idea is that individuals can be provided with at least partially personalized information based on their order of entry into the passenger boarding bridge. The at least partial personalization is done according to a probability principle for different target groups and is based on the assumption that different target groups book different booking classes. The system counts the number of persons boarding into the passenger boarding bridge and compares this with a number that is probably assigned to the individual booking classes.

Illustrated by an example, this means:
Assuming that a total of 100 people fit into an aircraft of a certain type and that the aircraft is fully booked for a flight. The system's computing system has information about the aircraft type and that this aircraft type usually comprises 30 business class seats and 70 economy class seats. The knowledge about the seat shares between business and economy seats is not required and can be replaced by predefined default values.

However, the presence of this information extends the accuracy of the target group-optimized output of information.

The detection system will now detect the people entering the passenger boarding bridge. This can be done, for example and non-limiting, with a people counting camera. The order of entry by the people is taken into account. In other words, by detecting the people while taking their order of entry into account, a form of counting the people takes place.

Detecting by the detection system can be done either at the boarding counter or directly in front of or in the area of the passenger boarding bridge. It is only relevant that the persons have been detected for the first time with/before reaching an information reception area. This applies preferably analogously if the persons want to get to the airport building after landing from the aircraft.

The invention is based on the basic idea that people in business class have other interests than people in economy class. The different interests therefore lead to the formation of different target groups. The system endeavors to assign the detected persons to their target group, at least on the basis of the entry count. Consideration of the entry order takes into account that the first persons to enter are usually business class passengers and that the subsequent persons belong to lower booking classes. This significantly optimizes the quality of the target group assignment.

The system automatically opens with the first target group, which in particular comprises the business class passengers. As soon as 30 people have received the target group-optimized information, the system switches to target group-optimized information output for the second target group, which in particular comprises the economy class passengers. The purpose of this is to ensure that each target group receives the information that is most likely to be relevant to them. The group-optimized output of information can be done in different ways, as long as the different target groups are given the opportunity to receive the information personalized to their target group. It can be tolerable that the transition area between the different target groups is stretched. This may be the case if, for example, a person briefly exits and re-enters the passenger boarding bridge. Then this person is counted twice, for example. It is also possible that the business class is not fully booked, for example. Nevertheless, it turns out that this risk is of little consequence in light of the data protection regulations that have been observed.

The system thus functions in full compliance with data protection requirements and still hits the right target group with its output information with an increased probability.

Within the airport, persons pass through common areas such as security check, passport control and duty free shops on the way to their respective gates. Within the common areas, persons are not separated and do intermingle with each other. Within the gate area, meaning the waiting area for travelers before boarding the aircraft, persons of one specific flight gather. Thus, the gate area offers a good opportunity for target group-optimized output of information compared to the common areas. The opportunity to address travelers individually with specific information tailored to their respective needs and interests increases further within the passenger boarding bridge.

For example, each person walking through a passenger boarding bridge features important criteria for needed information, such as known destination of the flight and/or known airline conducting the flight. Further features can be determined, e.g. boarding group (low group numbers boarding first), boarding priority (e.g. frequent flyers boarding first) and booking class of travelers (first class boarding first, then business class, then Economy class). These features seem to be advantageous to show travelers relevant information.

In particular, it can be assumed that potential for targeted information, meaning information customized to the needs and interest of a specific person, hereafter called smart information, is measured by the level of segmentation. The higher the level of segmentation, the higher the potential for smart information. In a simplified way, the level of segmentation on a scale between 0 (very little potential) to 10 (very high potential) at an airport is as follows:
0: Curbside
2: Check-in area
4: Security check & passport control area
4: Central duty free shops and other central areas with all passengers passing through
5: Duty free shops and other areas in specific concourses
8: Gate / waiting area
10: Passenger boarding bridge

In this example, it can be seen that the potential for smart information increases as persons arrive at the airport and proceed through the airport areas to eventually board the airplane - and vice versa: the potential decreases as travelers deboard the airplane and walk towards the exit.

Preferably, the information management system is configured to bring customized information to interested persons. Further preferably, the central information management system collects necessary information, provides a computing system to develop and apply algorithms for smart information and transmits the customized information content to the passenger boarding bridge.

Preferably, the central information management system derives information from one or more of multiple sources:
- Airport Operational Database (AODB): The AODB provides flight and gate information, incl. gate allocation, flight details such as arrival/departure time, destination, operating airline and aircraft type. In addition, the AODB provides information on booking numbers for flights.
- Alternatively, information on booking numbers can be obtains from airlines' systems.
- Central clock: The central clock synchronizes the information management system with other systems and provides accurate information regarding time and date.
- Airline master database: This can be a separate database or embedded within the information management system. It contains information regarding airline characteristics, e.g. leisure/business focus.
- Aircraft master database: This can be a separate database or embedded within the information management system. It contains information regarding aircraft characteristics, in particular aircraft configuration data according to aircraft type and operating airline such as classes (First, Business, Premium Economy, Economy) and number of seats in each class.
- Information master database: This can be a separate database or embedded within the information management system. It contains the information content. If the database is separate, the information management system requests and retrieves specific information content from the database according to current requirements as determined by the algorithms in the information management system.
- Passenger boarding bridge: The detection system sends information regarding the current boarding process from gate area and passenger boarding bridge, e.g. which target group is boarding, passengers with which priority are boarding and how many passengers have already boarded. The information can be obtained from multiple sources as components of the detection system. The most important sources are the boarding machines at the gate counter and a people counting camera in the entrance of the passenger boarding bridge. In addition, the gate area sends real-time turnaround information (e.g. on-/off-block times) and the operating status of gate equipment, in particular the passenger boarding bridge and Visual Docking Guidance System (VDGS/A-VDGS), to the information management system. E.g. if the VDGS sends the on-/off-block signal or the autolevelling arm of the passenger boarding bridge is activated/deactivated at the aircraft, the information can be used to automatically switch the displays on/off. Alternatively, the information from the gate area and gate equipment can be obtained via the AODB depending on the specific circumstances at the airport.

Preferably, information management system collects all information and processes it. To process the information and retrieve meaningful, customized information content from the information master database, the computing system applies algorithms which are developed and updated within the information management system. The relevance of the information content displayed in the gate area and/or passenger boarding bridge depends on the quality of the algorithms and the quality and amount of the information fed into the system.

Preferably, the algorithms of the computing system enable customized information according to one or more of the following selectors:
- Gate: Show information content that can be different from gate to gate. This feature can also be claimed alone, i.e. without the other features mentioned in this overall paragraph. It is also possible for this feature to be combined with some or all of the other features.
- Time: Show information content that can be different according to daytime and date. E.g. content for an early morning flight on Monday can be different compared to an late afternoon flight on Friday. Information can also be customized automatically according to the season. E.g. content can change automatically with change of calendar summer, autumn, winter and spring. This feature can also be claimed alone, i.e. without the other features mentioned in this overall paragraph. It is also possible for this feature to be combined with some or all of the other features.
- Airline: Show information content that can be different according to airline. Low cost airlines typically welcome passengers with different interests and financial possibilities than customers of full-service airlines. This feature can also be claimed alone, i.e. without the other features mentioned in this overall paragraph. It is also possible for this feature to be combined with some or all of the other features.
- Destination: Show information content that can be different depending on the destination of the flight or departure airport in case of flight arrivals. A flight from Frankfurt to Antalya typically attracts a group with different interests than a flight from Frankfurt to New York. This feature can also be claimed alone, i.e. without the other features mentioned in this overall paragraph. It is also possible for this feature to be combined with some or all of the other features.
- Aircraft type: Show information content that can change during the boarding (or deboarding) process depending on the aircraft type. The first 12 passengers boarding a big airplane are likely to travel in First Class and have different interests than the next 80 passengers in Business Class and the next 270 passengers in Economy Class. This feature can also be claimed alone, i.e. without the other features mentioned in this overall paragraph. It is also possible for this feature to be combined with some or all of the other features.
- Number of boarded passengers, information on boarding group and/or boarding priority in conjunction with booking figures: Combining this information enables the display of content that is more accurate and at the right time during the boarding (or deboarding) process than Selector. This feature can also be claimed alone, i.e. without the other features mentioned in this overall paragraph. It is also possible for this feature to be combined with some or all of the other features.

Preferably, the relevant content is determined once the information is obtained and processed according to the defined algorithms. The information management system retrieves the content from the information master database and sends it to the displays at the gate area and/or passenger boarding bridge.

Preferably, three basic locations can be differentiated where the content is shown:
- Gate area:
   a. In case of a flight departure: Content that is specific to the interests of the departing passengers at the respective gate. This feature can also be claimed alone, i.e. without the other features mentioned in this overall paragraph. It is also possible for this feature to be combined with some or all of the other features.
   b. In case of a flight arrival: Content that is specific to the interests of the arriving passengers at the respective gate. This feature can also be claimed alone, i.e. without the other features mentioned in this overall paragraph. It is also possible for this feature to be combined with some or all of the other features.
- Inside walls of the passenger boarding bridge:
   a. In case of a flight departure: Content that is specific to the interests of the departing passengers passing through the respective passenger boarding bridge. This feature can also be claimed alone, i.e. without the other features mentioned in this overall paragraph. It is also possible for this feature to be combined with some or all of the other features.
   b. In case of a flight arrival: Content that is specific to the interests of the arriving passengers passing through the respective passenger boarding bridge. This feature can also be claimed alone, i.e. without the other features mentioned in this overall paragraph. It is also possible for this feature to be combined with some or all of the other features.
- Outside walls of the passenger boarding bridge:
   a. Content that is specific to the interests of the departing passengers at the neighboring gate. This feature can also be claimed alone, i.e. without the other features mentioned in this overall paragraph. It is also possible for this feature to be combined with some or all of the other features.
   b. Content that is specific to the interests of the arriving passengers at the neighboring gate. This feature can also be claimed alone, i.e. without the other features mentioned in this overall paragraph. It is also possible for this feature to be combined with some or all of the other features.

The algorithms may preferably ensure that the output means are only activated as long as persons pass through the areas and have the possibility to look at the information.

According to a modified embodiment of the invention, it is provided that the one or more output means output the target group-optimized information visually and/or acoustically. Optical means can be, for example, screens. For acoustics, loudspeakers can be used. It is also possible to combine both options. The claimed options are means of information output, which can very quickly provide relevant information to persons walking by. It is therefore an efficient means of information delivery. These output means can also quickly switch between the target group-related information to be output, so that the target groups are reliably supplied with the information assigned to them.

According to a modified embodiment of the invention, it is provided that the information output system being configured to output target group-optimized information in the passenger boarding bridge when a target group assigned to the information has reached a defined information reception area of the respective output means. For this purpose, a presence sensor can be provided, which sensors the defined information reception area and/or the area around the defined information reception area for a presence of persons in such a way that the target group-optimized information is output at the appropriate moment and reaches its target group. Since the design of the passenger boarding bridge and the number of persons and target groups always vary, the system should be set up in such a way that it functions in accordance with the aforementioned functional requirements. The information can be output as soon as/as long as a certain number of persons of a target group has reached the defined information reception area or is still in this area. The defined number of persons can also comprise only one person. If there are persons of two or more target groups in the information reception area, it can be predefined which information is output by the output means. If the information output system comprises several output means distributed along the passenger boarding bridge, the output means can all output the same information or different, target group-optimized information. The latter is especially the case if it is identifiable which target group is closest to which output means.

According to a modified embodiment of the invention, it is provided that the system comprises one or more presence sensors configured to detect the information reception area, and preferably to switch off the information output system in case of a person-free detected information reception area. These can be the same technical means as for the detection system or different presence sensing means. For example, it may be sufficient to detect that a person is present in the information reception area, e.g. as in the case of a motion sensor. If, for example, a timer system is used, it can be derived from experience/estimated values which target group is likely to be in the information reception area, so that information that is likely to be appropriate is output. The result becomes more accurate if the presence sensor(s) is/are part of a people tracking system. This means that the movement of people through the passenger boarding bridge can be at least partially tracked so that the target group assignment can be maintained as reliably as possible.

According to a modified embodiment of the invention, it is provided that the system comprises a timer system configured to time the target group-optimized information to be output. The time can be set statically, which makes the system simpler and more independent of personal data. Alternatively, the number of detected persons can be used to determine which target group is to be provided with the information assigned to it and for how long.

According to a modified embodiment of the invention, it is provided that the computing system and the timer system interact in such a way that each target group is assigned a specific transit time, so that the target group-optimized information is output sequentially after the lapse of the respective specific transit time. This is done with the greatest possible anonymity, so that the movement profile of individuals is not tracked in any way, further increasing personal data protection.

According to a modified embodiment of the invention, it is provided that the target group-optimized information comprises advertising. It may also be that the target group-optimized information comprises advertising. This makes sense, for example, if the technical system is to position advertising as anonymously as possible and yet as accurately as possible. For example, it can be assumed that the first target group belongs to the business class and luxury goods are displayed to them. In contrast, the next group, which probably belongs to the economy class, is shown inexpensive consumer goods.

According to a modified embodiment of the invention, it is provided that the selection of target group-optimized information is based at least in part on an airport operations database and/or at least in part on booking numbers from airline systems and/or at least in part on the time of flight and/or at least in part on the destination of flight and/or at least in part on advanced flight data. By taking this data into account, the information displayed can more precisely meet the needs of persons in specific target groups. For example, it is more likely that a Monday morning flight to a world trade metropolis will require information about the nearest cab rank and that, in contrast, the longest open supermarket will be displayed on a Friday late afternoon to a short holiday destination.

According to a modified embodiment of the invention, it is provided that the target groups are divided into the number of travel classes of a corresponding flight, wherein preferably an information influence takes place to the effect that a next travel class is called up as the next target group for action, whereby particularly preferably an artificial intelligence can be used for this. As an example, it can be assumed that business class passengers, in addition to their willingness to take more expensive flights, also have a different relationship/attitude to money in general than economy class passengers, who usually maintain a more frugal lifestyle. Accordingly, there may be a different interest in the information to be provided. If the system knows the number of booking classes, these can be taken into account directly to avoid systemic misallocations. Also, for example, the pause between the flow of persons in stages can be used to infer the start of a new target group from this. This then means that a number of people in a target group does not necessarily have to be filled. This can be the case, for example, if the business class is not fully booked. In that case, the maximum number of persons for a target group can be adjusted. An artificial intelligence could distinguish between the target groups particularly reliably here.

The above mentioned information management system does not comprise the passenger boarding bridge.

Advantageous is also a passenger boarding bridge, comprising the above mentioned information management system with at least one of the preceding features. Such a passenger boarding bridge allows personalized, target group-optimized and at the same time data protection-compliant information to be provided to persons.

Advantageous is also a method for target group-optimized output of information to persons in a passenger boarding bridge, using the above mentioned information management system with at least one of the preceding features, the method at least comprising the steps of:
- detecting persons entering the boarding bridge, by the detection system, taking into account their entry order;
- assigning the persons detected by a detection system to target groups, by the computing system,
   - wherein at least a first target group comprises a defined maximum number of persons, wherein the computing system determines the respective target group as complete when it comprises its defined maximum number of persons, wherein subsequently entering persons are assigned to a next target group,
   - wherein the entering persons are assigned to the respective target group based on the entry order;
- outputting the target group-optimized information in the passenger boarding bridge, by the information output system with one or more output means.

Preferably, the suitability features of the system claims are also applicable to the method invention, although repetition is omitted for reasons of overview in the sense of a concise reproduction of the invention. All features described for the system shall also apply here.

According to a modified embodiment of the invention, it is provided that the method is performed for persons boarding and/or deboarding an aircraft. Thus, it does not matter whether the information is to be provided only on the outbound flight or only on the return flight. It makes sense to use both ways, or at least one option.

Advantageous is also a computer program comprising instructions which, when the program is executed by a computer, cause the computer to execute the steps of the above mentioned method.

Advantageous is also a data carrier signal, which the above mentioned computer program transmits.

Advantageous is also a computer-readable medium comprising instructions which, when executed by a computer, cause the computer to execute the steps of the above mentioned method.

### Brief description of the drawings

In the following, the invention is explained in more detail with reference to the attached drawings, using preferred design examples. The word figure is abbreviated in the drawings as Fig.

Show in the drawings
- Fig. 1: schematic top view of a system in connection with a passenger boarding bridge according to a preferred design example of the invention, wherein a plurality of detected persons are waiting to enter the passenger boarding bridge;
- Fig. 2: schematic view of the system according to Fig. 1, wherein a first person has entered the passenger boarding bridge;
- Fig. 3: schematic view of the system according to Fig. 2, wherein a first target group has entered the passenger boarding bridge and the next target group is still outside of the passenger boarding bridge;
- Fig. 4: schematic view of the system according to Fig. 3, wherein the first target group enters an information reception area in the passenger boarding bridge and an output means of an information output system outputs an information for the first target group;
- Fig. 5: schematic view of the system according to Fig. 4, wherein the first target group is completely in the information reception area and a second target group has completely entered the passenger boarding bridge;
- Fig. 6a/b: schematic view of the system according to Fig. 5, wherein two different situations of information output are shown when both target groups are in the information reception area;
- Fig. 7: schematic view of the system according to Fig. 6, wherein the second target group is partly already leaving the passenger boarding bridge, while information for second target group is outputted, while further two additional persons are standing in front of the passenger boarding bridge and are detected by the detecting system; and
- Fig. 8: schematic view of the arrangement according to Fig. 7, wherein the further two people forming a third target group, being in the information reception area and receiving an information for third target group.

### Detailed description of the execution examples

The described design examples are only examples which can be modified and/or supplemented in many ways within the scope of the claims. Each feature described for a specific design example can be used independently or in combination with other features in any other design example. Each feature described for a design example of a particular claim category can also be used in a corresponding way in a design example of another claim category.

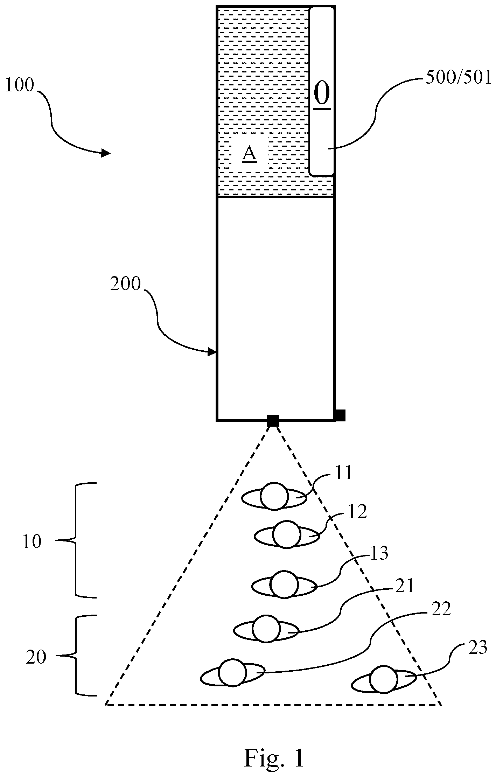

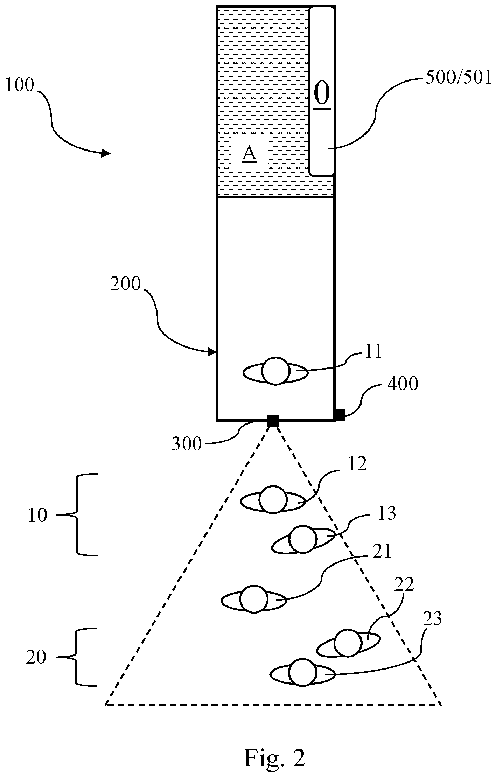

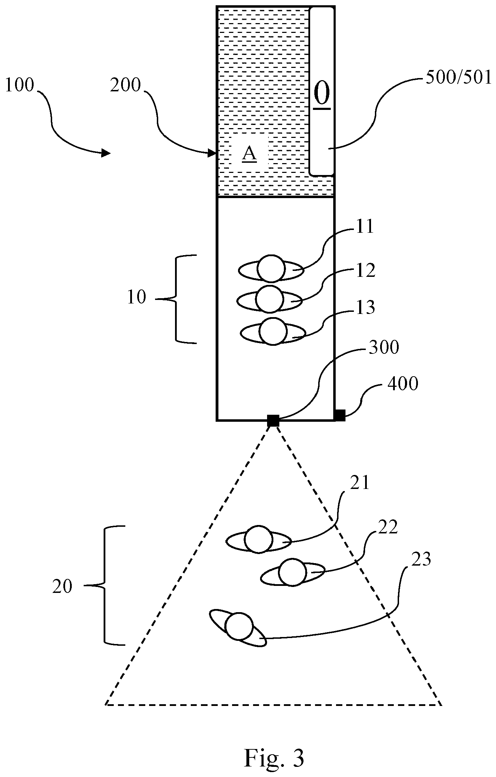

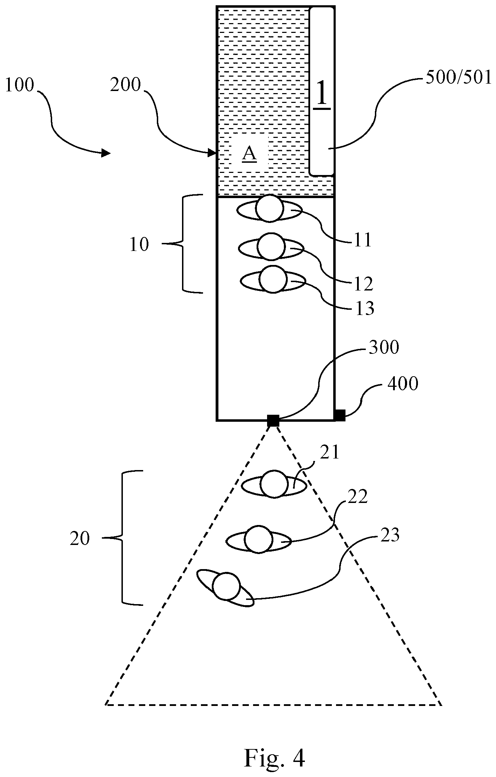

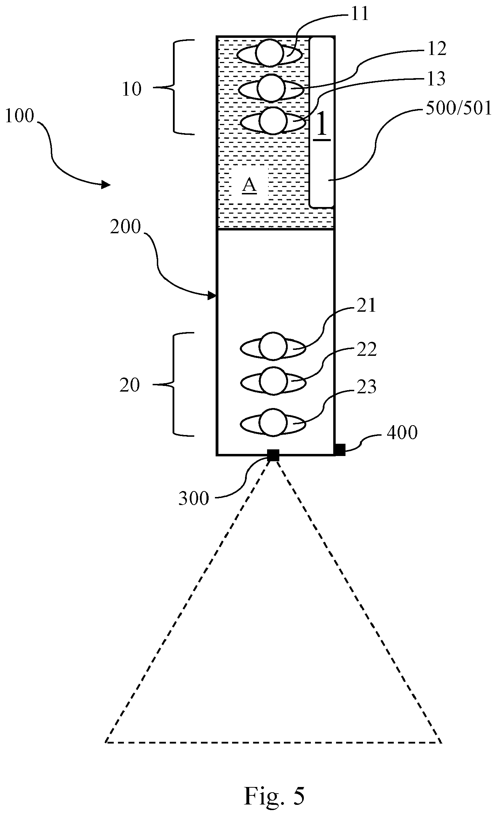

All figures 1 to 8 show an information management system 100 for target group-optimized output of information 1, 2, 3 to persons 11, 12, 13, 21, 22, 23, 31, 32 in a passenger boarding bridge 200, the information management system 100 comprising:
- a detection system 300 configured to detect persons 11, 12, 13, 21, 22, 23, 31, 32 entering the boarding bridge 200, taking into account their entry order;
- a computing system 400 configured to assign the persons 11, 12, 13, 21, 22, 23, 31, 32 detected by a detection system 300 to target groups 10, 20, 30,
- wherein two target groups 10, 20 comprise a defined maximum number of persons 11, 12, 13, 21, 22, 23, wherein the computing system 400 determines the respective target group 10, 20 as complete when it comprises its defined maximum number of persons 11, 12, 13, 21, 22, 23, wherein subsequently, which means at least after the first target group 10, entering persons 21, 22, 23, 31, 32 are assigned to a next target group 20, 30,
- wherein the entering persons 11, 12, 13, 21, 22, 23, 31, 32 are assigned to the respective target group 10, 20, 30 based on the entry order;
- an information output system 500 with one output means 501, the information output system 500 being configured to output target group-optimized information 1, 2, 3 in the passenger boarding bridge 200.

In all of Figures 1 to 8, the information management system 100 is configured to function on a passenger boarding bridge 200. However, the passenger boarding bridge 200 is not part of the information management system 100.

The information management system 100 illustrated in the figures shows how target group-optimized information 1, 2, 3 can be output for certain target groups 10, 20, 30.

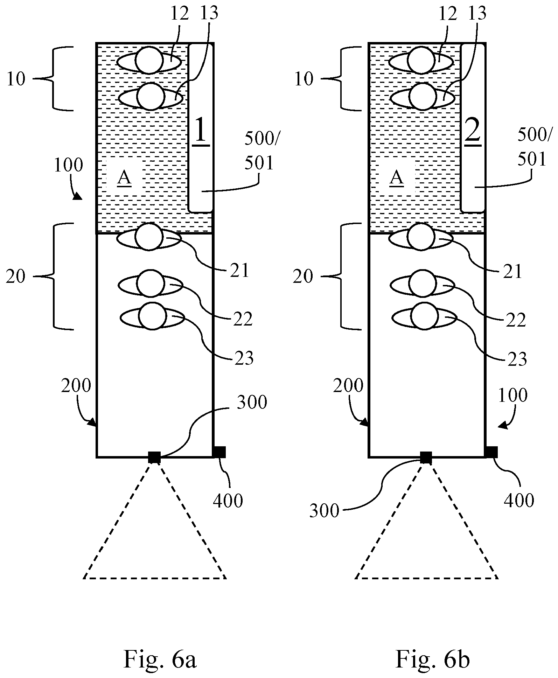

The first target group 10 comprises three persons 11, 12, 13. The first target group 10 is particularly recognizable in figures 1 to 5 and partly figure 6a/b.

The second target group 20 comprises three persons 21, 22, 23. The second target group 20 is particularly recognizable in Figures 1 to 7.

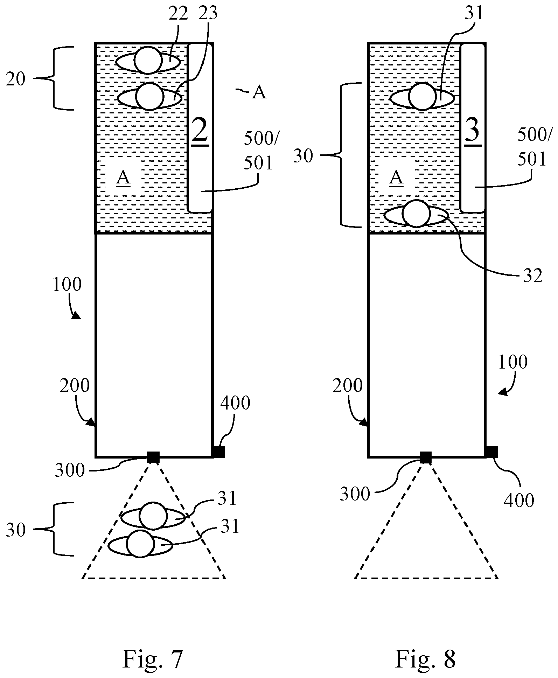

The third target group 30 comprises two persons 31, 32. The third target group 30 is particularly recognizable in Figures 7 and 8.

There is no information output 0 as long as no target group is located at the information reception area A. This is shown in figures 1 to 3.

An information 1 for first target group 10 is output when the first target group 10 is located at the information reception area A. This is shown in figures 1 to 6a.

An information 2 for second target group 20 is output when the second target group 20 is located at the information reception area A. This is illustrated in figures 6b and 7.

An information 3 for third target group 30 is output when the third target group 30 is located at the information reception area A. This is shown in figure 8.

In summary, this can be described in such a way that the information output system 500 being configured to output target group-optimized information 1, 2, 3 in the passenger boarding bridge 200 when a target group 10, 20, 30 assigned to the information 1, 2, 3 has reached a defined information reception area A of the respective output means 501.

According to all figures it is preferred that the output means 501 outputs the target group-optimized information 1, 2, 3 visually and/or acoustically.

Preferred is provided that the information management system 100 comprises one or more presence sensors configured to detect the information reception area A. The presence sensor/s is/are not shown in detail. However, it is intended in particular to detect the entire information reception area A, which is shown with dashed lines. Further, it is preferred to switch off the information output system 500 in case of a person-free detected information reception area A. This is not shown in detail and would be the case once the persons 31, 32 of Figure 8 have entered their aircraft from the passenger boarding bridge 200.

Preferred is provided that the information management system 100 comprises a timer system configured to time the target group-optimized information 1, 2, 3 to be output. More preferred is provided that the computing system 400 and the timer system interact in such a way that each target group 10, 20, 30 is assigned a specific transit time, so that the target group-optimized information 1, 2, 3 is output sequentially after the lapse of the respective specific transit time. For example, the timer system may start as soon as a first person 11, 21, 31 of a target group 10, 20, 30 has entered the information reception area A. Optionally, the length of the specific transit time may depend on the number of persons of a target group 10, 20, 30.

If, by way of example, Figures 6a and 6b are considered independently of the further figures, it is then possible that in Figure 6a the specific transit time was set too long. In contrast, according to Figure 6b, it may have been recognized that the first target group 10 comprised only three persons 11, 12, 13, so that the specific transit time was adjusted predictively in such a way that when the second target group 20 reached the information reception area A, the target group-optimized information 1 for first target group 10 automatically changed to the target group-optimized information 2 for second target group 20. However, this can lead to the fact that under certain circumstances persons 12, 13 of the first target group 10 now receive the target group-optimized information 2 for second target group 20.

Alternatively or in addition to the above explanations of Figures 6a and 6b, it can be provided that the target group-optimized information output 1, 2, 3 is carried out according to a prioritization or weighting for a plurality of target groups 10, 20, 30, which are located within the information reception area A.

In particular, in the case of a plurality of target groups 10, 20, 30, which are located within the information reception area A, a plurality of prioritizations or weightings can also be carried out in a ranking order.

In particular, this can be done in such a way that it is weighed which of the target groups 10, 20, 30 derives the highest benefit from the target group-optimized information 1, 2, 3 assigned to it.

If there are several output means 501, an attempt is made in particular to distribute the target group-optimized information 1, 2, 3 per output means 501 according to the greatest benefit carried out here.

According to a simple example, it can be provided that it is to be assumed that the first target group 10 is more receptive for the target group-optimized information 1 than the second target group 20 for the target group-optimized information 2. Then, in case of two or more target groups 10, 20, 30 within the information reception area A, the information 1 is output for the first target group 10. This corresponds to the embodiment shown in Figure 6a.

If, for example, it is assumed that the second target group 20 is more receptive to the target group-optimized information 2 than the first target group 10 is to the target group-optimized information 1, then in the case of two or more target groups 10, 20, 30 within the information reception area A, the information 2 is output for the second target group 20. This corresponds to the embodiment according to Figure 6b.

For further target groups 30 the explanations apply preferably mutatis mutandis.

The prioritization or weighting can be predetermined beforehand on the basis of manual inputs or determined on the basis of an algorithm. It is also possible that a preceding target group-optimized information 1, 2, 3 is output until the last person 11, 12, 13, 21, 22, 23, 31, 32 of the respective target group 10, 20, 30 has left the information reception area A. Subsequently, the next target group-optimized information 2, 3 could be output.

Accordingly, the information output 1, 2, 3 would be simplified according to the order of the target groups 10, 20, 30.

An advantage can thus be that the highest target group benefit can always be achieved.

The prioritization or weighting is a preferred and non-limiting embodiment example, which is independent of other features of other embodiments.

In principle and independently of the other explanations, prioritization can be set if there is a conflict between two target groups 10, 20, 30 in the information reception area A.

In particular, it may be provided that the target group-optimized information 1, 2, 3 comprises advertising. This makes it possible to place advertising that is tailored to the target group 10, 20, 30 and creates a feeling of satisfaction among the relevant target group. If an upscale target group 10 is offered only party goods by the information 3 for third target group 30, they may feel uncomfortable. However, if young travelers of the third target group 30 are shown only luxury items by the information 1 for first target group 10, this may reduce identification with the selected airline.

### Reference list

- 0: No Information output
- 1: Target group-optimized information for first target group
- 2: Target group-optimized information for second target group
- 3: Target group-optimized information for third target group

- 10: First target group
- 11: First person of the first target group
- 12: Second person of the first target group
- 13: Third person of the first target group
- 20: Second target group
- 21: First person of the second target group
- 22: Second person of the second target group
- 23: Third person of the second target group
- 30: Second target group
- 31: Third person of the third target group
- 32: Second person of the third target group

- 100: Information management system for target group-optimized output of information
- 200: Passenger boarding bridge
- 300: detection system
- 400: computing system
- 500: information output system
- 501: output means

- A: information reception area

## Claims

1. Information management system for target group-optimized output of information (1, 2, 3) to persons (11, 12, 13, 21, 22, 23, 31, 32) in a passenger boarding bridge (200), the information management system (100) comprising:
- a detection system (300) configured to detect persons (11, 12, 13, 21, 22, 23, 31, 32) entering the boarding bridge (200), taking into account their entry order;
- a computing system (400) configured to assign the persons (11, 12, 13, 21, 22, 23, 31, 32) detected by a detection system (300) to target groups (10, 20, 30),
- wherein at least a first target group (10, 20, 30) comprises a defined maximum number of persons (11, 12, 13, 21, 22, 23, 31, 32), wherein the computing system (400) determines the respective target group (10, 20, 30) as complete when it comprises its defined maximum number of persons (11, 12, 13, 21, 22, 23, 31, 32), wherein subsequently entering persons (21, 22, 23, 31, 32) are assigned to a next target group (20, 30),
- wherein the entering persons (11, 12, 13, 21, 22, 23, 31, 32) are assigned to the respective target group (10, 20, 30) based on the entry order;
- an information output system (500) with one or more output means (501), the information output system (500) being configured to output target group-optimized information (1, 2, 3) in the passenger boarding bridge (200).

2. Information management system for target group-optimized output of information (1, 2, 3) to persons (11, 12, 13, 21, 22, 23, 31, 32) in the passenger boarding bridge (200), according to claim 1, wherein the one or more output means (501) output the target group-optimized information (1, 2, 3) visually and/or acoustically.

3. Information management system for target group-optimized output of information (1, 2, 3) to persons (11, 12, 13, 21, 22, 23, 31, 32) in the passenger boarding bridge (200), according to at least one of the claims 1 or 2, wherein the information output system (500) being configured to output target group-optimized information (1, 2, 3) in the passenger boarding bridge (200) when a target group (10, 20, 30) assigned to the information (1, 2, 3) has reached a defined information reception area (A) of the respective output means (501).

4. Information management system for target group-optimized output of information (1, 2, 3) to persons (11, 12, 13, 21, 22, 23, 31, 32) in the passenger boarding bridge (200), according to at least one of the preceding claims, wherein the information management system (100) comprises one or more presence sensors configured to detect the information reception area (A), and preferably to switch off the information output system (500) in case of a person-free detected information reception area (A).

5. Information management system for target group-optimized output of information (1, 2, 3) to persons (11, 12, 13, 21, 22, 23, 31, 32) in the passenger boarding bridge (200), according to at least one of the preceding claims, wherein the information management system (100) comprises a timer system configured to time the target group-optimized information (1, 2, 3) to be output.

6. Information management system for target group-optimized output of information (1, 2, 3) to persons (11, 12, 13, 21, 22, 23, 31, 32) in the passenger boarding bridge (200), according to the previous claim, wherein the computing system (400) and the timer system interact in such a way that each target group (10, 20, 30) is assigned a specific transit time, so that the target group-optimized information (1, 2, 3) is output sequentially after the lapse of the respective specific transit time.

7. Information management system for target group-optimized output of information (1, 2, 3) to persons (11, 12, 13, 21, 22, 23, 31, 32) in the passenger boarding bridge (200), according to at least one of the preceding claims, wherein the target group-optimized information (1, 2, 3) comprises advertising.

8. Information management system for target group-optimized output of information (1, 2, 3) to persons (11, 12, 13, 21, 22, 23, 31, 32) in the passenger boarding bridge (200), according to at least one of the preceding claims, wherein the selection of target group-optimized information (1, 2, 3) is based at least in part on an airport operations database and/or at least in part on booking numbers from airline systems and/or at least in part on the time of flight and/or at least in part on the destination of flight and/or at least in part on advanced flight data.

9. Information management system for target group-optimized output of information (1, 2, 3) to persons (11, 12, 13, 21, 22, 23, 31, 32) in the passenger boarding bridge (200), according to at least one of the preceding claims, wherein the target groups (10, 20, 30) are divided into the number of travel classes of a corresponding flight, wherein preferably an information influence takes place to the effect that a next travel class is called up as the next target group (10, 20, 30) for action, whereby particularly preferably an artificial intelligence can be used for this.

10. Passenger boarding bridge, comprising the information management system (100) according to at least one of the preceding claims.

11. Method for target group-optimized output of information (1, 2, 3) to persons (11, 12, 13, 21, 22, 23, 31, 32) in a passenger boarding bridge (200), using the information management system (100) according to at least one of the claims 1 to 9, the method at least comprising the steps of:
- detecting persons (11, 12, 13, 21, 22, 23, 31, 32) entering the boarding bridge (200), by the detection system (300), taking into account their entry order;
- assigning the persons (11, 12, 13, 21, 22, 23, 31, 32) detected by a detection system (300) to target groups (10, 20, 30), by the computing system (400),
- wherein at least a first target group (10, 20, 30) comprises a defined maximum number of persons (11, 12, 13, 21, 22, 23, 31, 32), wherein the computing system (400) determines the respective target group (10, 20, 30) as complete when it comprises its defined maximum number of persons (11, 12, 13, 21, 22, 23, 31, 32), wherein subsequently entering persons (21, 22, 23, 31, 32) are assigned to a next target group (20, 30),
- wherein the entering persons (11, 12, 13, 21, 22, 23, 31, 32) are assigned to the respective target group (10, 20, 30) based on the entry order;
- outputting the target group-optimized information (1, 2, 3) in the passenger boarding bridge (200), by the information output system (500) with one or more output means (501);
the method in particular comprising at least one feature of the claims 1 to 9.

12. Method for target group-optimized output of information (1, 2, 3) to persons (11, 12, 13, 21, 22, 23, 31, 32) in a passenger boarding bridge (200), according to the previous claims, wherein the method is performed for persons (11, 12, 13, 21, 22, 23, 31, 32) boarding and/or deboarding an aircraft.

13. Computer program comprising instructions which, when the program is executed by a computer, cause the computer to execute the steps of the method according to at least one of the claims 11 or 12.

14. Data carrier signal, which the computer program transmits according to the previous claim.

15. Computer-readable medium comprising instructions which, when executed by a computer, cause the computer to execute the steps of the method according to at least one of the claims 11 or 12.
